# EUROPEAN PATENT SPECIFICATION

(11) **EP 1 296 005 B1**
(45) Date of publication and mention of the grant of the patent: **30.07.2008**
(21) Application number: 02102366.8
(22) Date of filing: 17.09.2002
(51) Int. Cl.: E04F 19/04, F16B 19/00, F16B 21/08

(54) **Fixing device**
Befestigungsvorrichtung
Dispositif de fixation

(30) Priority: 20.09.2001 NL 1018997
(43) Date of publication of application: 26.03.2003
(73) Proprietor: Borgh Swiss A.G., 7000 Chur (CH)
(72) Inventor: VEERKAMP, Wim, 1351 AG ALMERE (NL); BALEN, Frank,Pieter, Jacobus, 1351 AG ALMERE (NL)
(74) Representative: Hooiveld, Arjen Jan Winfried

(56) References cited:
- EP-A- 0 566 134
- DE-A- 19 732 485
- US-A- 1 944 150
- US-A- 4 002 098

## Description

The invention relates to a system comprising a fixing device for fixing a strip-shaped or plate-shaped element of said system to a supporting surface, in particular a wall, a floor or a deck, which device comprises a pin-shaped body to be anchored in said supporting surface, which body is capable of engaging with a widened head thereof in a groove extending in the longitudinal direction of the element, which groove is present in a side of the element that is to face towards the supporting surface, which device is made of a plastic material. The invention relates in particular to a fixing device in the form of a plug for blind mounting (i.e. without the groove and the plug that is present therein being exposed to view from the outside) of a skirting strip, floor covering strip or sealing strip to a wall, a floor or a ceiling, respectively. It is noted that the strip-shaped or plate-shaped element may in principle be made of any suitable material, such as wood, a plastic or a metal or the like, on the understanding that the aforesaid longitudinal groove must be formed on the rear side of the element so as to enable manual blind mounting (in principle) of the element on the supporting surface.

Such a fixing device for fixing a skirting strip to a wall is known from German patent publication No 197 32 485 (D.A. Fuchs). The body of the fixing device that is known from said publication is provided with outwardly extending ribs, whilst the widened head, which is made in one piece therewith, consists of two clamping members, which are spatially separated by means of a recess, for example a V-shaped recess. The clamping members are spring members, which enables them to wedge in the groove of the skirting strip. The clamping members may be fitted with barbs. United States patent publications no. 1,944,150 and 4,002,098 describe metal nails.

One drawback of the fixing device as disclosed in the aforesaid German patent publication No 197 32 485 is that the clamping members thereof gradually lose their spring force with the passage of time, which has an adverse effect on the quality of the connection of the skirting strip to the wall.

The object of the invention is to obviate the drawback of the prior art as described above, i.e. to provide a fixing device by means of which a strip-shaped or plate-shaped element can be firmly fixed to a (solid) supporting surface in a durable manner.

In order to accomplish that objective, a system of the kind referred to in the introduction is characterized in that the widened head is provided with deformable ribs in the form of annular fins extending outwardly with respect to said body, at least along part of its outer surface, and that, when the widened head is pressed into the longitudinal groove, said ribs will deform in such a manner that the widened head will wedge in the longitudinal groove under the influence of a tensioning force acting in the plane of the plate-shaped elements. The deformation of the ribs causes the widened head to wedge in the groove as a result of a tensioning force acting in the plane of the strip-shaped or plate-shaped element. Said ribs are preferably either plastically or elastically deformable. In a preferred variant comprising elastically deformable ribs, the ribs can return to their starting position (i.e. their position prior to being fitted in the groove of the strip-shaped or plate-shaped element) after being deformed (i.e. after being fitted in the grooves of the element), whereas this is not possible in the case of plastically deformable ribs. The effect that is achieved by selecting a cross-sectional dimension of the widened head which is that most equal to the cross-sectional dimension of the groove of the strip-shaped or plate-shaped element is that the aforesaid annular fins will deform upon fitting of the device, thus providing a solid and reliable fixation.

Tests have shown that the annular fins can be firmly fitted in the groove of the strip-shaped or plate-shaped element by hand, and any tolerances in the dimensioning of the groove can readily be offset by said deformation. A further advantage of the annular fins is the fact that they are point-loaded upon being fitted in the groove rather than along lines (as is the case with the aforesaid German patent No 197 32 485), as a result of which the force with which the fins are pressed into walls of the groove and the buckle load to which they are subjected are only small.

In another preferred embodiment of a system according to the invention, the widened head has a height which at most corresponds to the inner height of the groove of the element.

In another preferred embodiment of a system according to the invention, the widened head comprises at least three interconnected subheads, each subhead having an at least substantially circular longitudinal section. In another preferred variant, the widened head comprises at least three interconnected subheads, each subhead having an at least substantially rectangular longitudinal section.

In another preferred embodiment of a system according to the invention, the body tapers off in downward direction from the widened head. The effect that is achieved therewith, in combination with the body comprising radially extending ribs in the form of annular fins, is that the present fixing device can be fitted in a bore in the supporting surface in a quick and easy manner - in particular as a result of the fact that the stiffness of the fins decreases in downward direction from the widened head - and that any tolerances in the dimensioning of the bore can readily be offset by (deformation of) the fins.

The invention will now be explained in more detail with reference to Figures of a drawing, in which:
- Figure 1 is a schematic side elevation of a fixing device according to the invention;
- Figure 2 is a partially cut-alway side elevation of a skirting strip, which is fixed to a wall by means of the fixing device of Figure 1; and
- Figure 3 shows two perspective views of the widened head of a fixing head in another variant not according to invention.

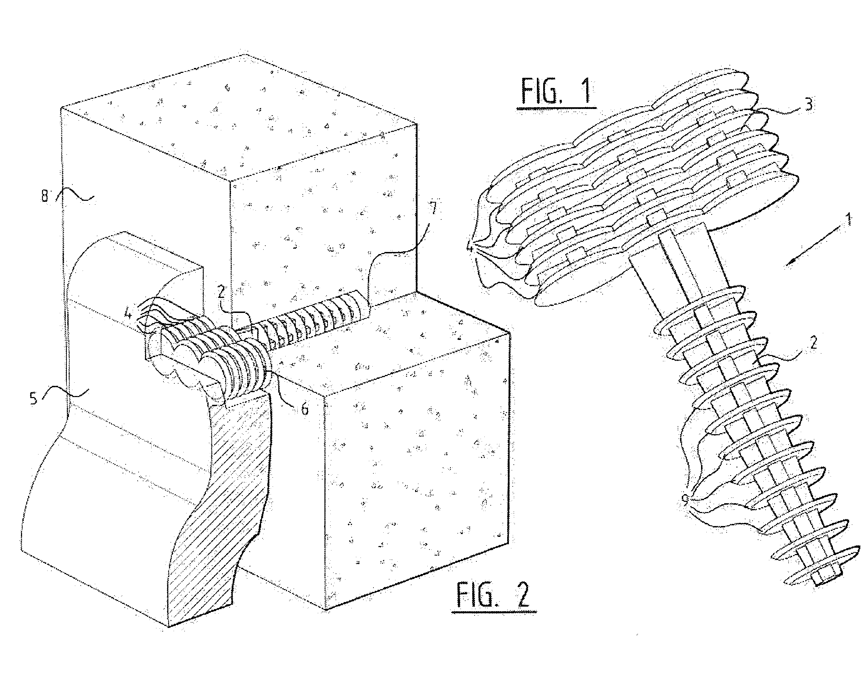

Referring to Figures 1 and 2, there is shown a fixing device according to the invention in the shape of a plug 1 made in one piece of a plastic material, which plug consists of a body 2 and a widened head 3. The widened head 3 comprises radially outwardly extending, elastically deformable ribs 4. When the widened head 3 is pressed into a longitudinal groove 6 that has been milled out at the rear side of a skirting strip 5, the ribs 4 will deform in such a manner that the widened head 3 will wedge in the longitudinal groove 6 under the influence of a tensioning force acting in the plane of the skirting strip 5. As is shown in Figure 2, the height of the widened head 3 is at most equal to the inner height of the longitudinal groove 6 in the skirting strip 5, whilst the cross-sectional dimension of the widened head 3 is at most equal to the cross-sectional dimension of the longitudinal groove 6 (seen in a projection along the body 2), thus enabling an optimum deformation of the ribs 4. The ribs 4 are in the form of annular fins. Subsequently, the body 2 of the plug 1 is inserted into pre-drilled holes 7 in the wall 8. The ribs 9 of the body 2 of the plug 1, which are in the form of annular fins, also deform either elastically or plastically upon insertion so as to realise a tight connection of the skirting strip and the plug 1 to the wall 8. As is shown in Figure 2, the body 2 tapers off in downward direction from the widened head 3.

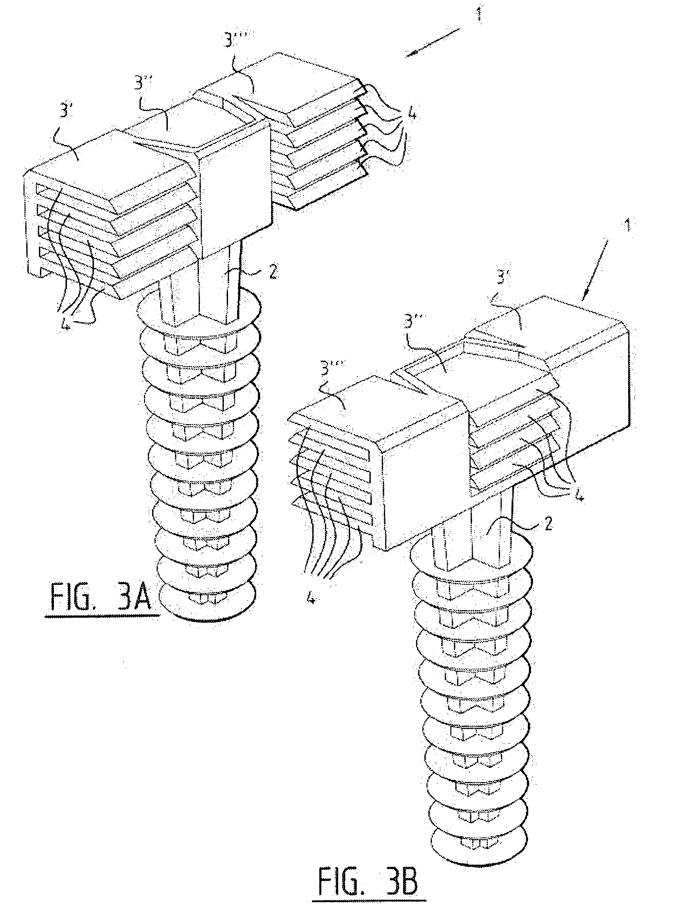

Figure 3 shows an alternative widened head 3, in which the body 2 is identical to the body that is shown in Figures 1 and 2. The widened head 3 comprises three interconnected subheads (3', 3'', 3'''), each of rectangular longitudinal section. Each subhead (3', 3'', 3''') is provided with plastically deformable, outwardly extending ribs 4.

The invention is not limited to the embodiments as described above, but it also extends to other variants that fall within the scope of the appended claims.

## Claims

1. A system comprising a fixing device (1) for fixing a strip-shaped or plate-shaped element (5) of said system to a supporting surface (8), in particular a wall, a floor or a deck, which device (1) comprises a pin-shaped body (2) to be anchored in said supporting surface, which body (2) is capable of engaging with a widened head (3) thereof in a groove (6) extending in the longitudinal direction of the element (5), which groove (6) is present in a side of the element (5) that is to face towards the supporting surface, which device (1) is made from a plastic material, **characterized in that** the widened head (3) is provided with deformable ribs (4) in the form of annular fins extending outwardly with respect to said body (2), at least along part of its outer surface, and that, when the widened head (3) is pressed into the longitudinal groove (6), said ribs (4) will deform in such a manner that the widened head (3) will wedge in the longitudinal groove (6) under the influence of a tensioning force acting in the plane of the plate-shaped elements (5).

2. A system according to claim 1, wherein said ribs (4) are plastically deformable.

3. A system according to claim 1, wherein said ribs (4) are elastically deformable.

4. A system according to claim 1, wherein said ribs (4) are in the form of annular fins.

5. A system according to any one of the preceding claims 1 - 4, wherein the widened head (3) has a height which at most corresponds to the inner height of the groove (6) of the element (5).

6. A system according to any one of the preceding claims 1 - 5, wherein the widened head (3) comprises at least three interconnected subheads (3^{I}, 3^{II}, 3^{III}), each subhead (3^{I}, 3^{II}, 3^{III}) having an at least substantially circular longitudinal section.

7. A system according to any one of the preceding claims 1 - 5, wherein the widened head (3) comprises at least three interconnected subheads (3^{I}, 3^{II}, 3^{III}), each subhead (3^{I}, 3^{II}, 3^{III}) having an at least substantially rectangular longitudinal section.

8. A system according to any one of the preceding claims 1 - 7, wherein the body (2) tapers off in downward direction from the widened head (3).

9. A system according to any one of the preceding claims 1 - 8, wherein the body (2) comprises radially extending ribs (9) in the form of annular fins.

## Patentansprüche

1. System mit einer Befestigungseinrichtung (1) zum Befestigen eines streifenförmigen oder plattenförmigen Elements (5) des genannten Systems an einer tragenden Oberfläche (8), insbesondere einer Wand, einer Decke oder einem Deck, wobei die Einrichtung (1) einen stiftförmigen Körper (2) aufweist, der in der genannten tragenden Oberfläche zu verankern ist, wobei der Körper (2) in der Lage ist, mit einem erweiterten Kopf (3) davon in eine Nut (6) einzugreifen, die sich in der Längsrichtung des Elements (5) erstreckt, wobei die Nut (6) in einer Seite des Elements (5) vorhanden ist, das in Richtung der tragenden Oberfläche weisen soll, wobei die Einrichtung (1) aus einem Kunststoffmaterial hergestellt ist, **dadurch gekennzeichnet, dass** der erweiterte Kopf (3) mit verformbaren Rippen (4) in Form von ringförmigen Lamellen versehen ist, die sich in Bezug auf den genannten Körper (2) nach außen erstrecken, zumindest entlang eines Teils seiner äußeren Oberfläche, und dass, wenn der erweiterte Kopf (3) in die Längsnut (6) gedrückt wird, die genannten Rippen (4) sich auf eine solche Weise verformen, dass der erweiterte Kopf (3) sich unter der Wirkung der Zugkraft, die in der Ebene des plattenförmigen Elements (5) wirkt, in der Längsnut (6) verkeilt.

2. System nach Anspruch 1, **dadurch gekennzeichnet, dass** die genannten Rippen (4) plastisch verformbar sind.

3. System nach Anspruch 1, **dadurch gekennzeichnet, dass** die genannten Rippen (4) elastisch verformbar sind.

4. System nach Anspruch 1, **dadurch gekennzeichnet, dass** die genannten Rippen (4) in der Form von ringförmigen Lamellen ausgebildet sind.

5. System nach einem der Ansprüche 1 bis 4, **dadurch gekennzeichnet, dass** der erweiterte Kopf (3) eine Höhe aufweist, die höchstens der inneren Höhe der Nut (6) des Elements (5) entspricht.

6. System nach einem der Ansprüche 1 bis 5, **dadurch gekennzeichnet, dass** der erweiterte Kopf (3) zumindest drei miteinander verbundene Teilköpfe (3^{I}, 3^{II}, 3^{III}) aufweist, wobei jeder Teilkopf (3^{I}, 3^{II}, 3^{III}) einen zumindest im wesentlichen kreisförmigen Längsquerschnitt aufweist.

7. System nach einem der Ansprüche 1 bis 5, **dadurch gekennzeichnet, dass** der erweiterte Kopf (3) zumindest drei miteinander verbundene Teilköpfe (3^{I}, 3^{II}, 3^{III}) aufweist, wobei jeder Teilkopf (3^{I}, 3^{II}, 3^{III}) einen zumindest im wesentlichen rechteckigen Längsquerschnitt aufweist.

8. System nach einem der Ansprüche 1 bis 7, **dadurch gekennzeichnet, dass** der Körper (2) in einer nach unten weisenden Richtung von dem erweiterten Kopf (3) konisch zuläuft.

9. System nach einem der Ansprüche 1 bis 8, **dadurch gekennzeichnet, dass** der Körper (2) radial verlaufende Rippen (9) in Form von ringförmigen Lamellen aufweist.

## Revendications

1. Système comprenant un dispositif (1) de fixation pour fixer un élément (5) en forme de bande ou de plaque dudit système à une surface (8) de support, en particulier un mur, un sol ou un plancher, lequel dispositif (1) comprend un corps (2) en forme de tige devant être ancré dans ladite surface de support, lequel corps (2) peut venir en contact avec une tête (3) élargie de celui-ci dans une cannelure (6) qui s'étend dans le sens longitudinal de l'élément (5), laquelle cannelure (6) est présente dans un côté de l'élément (5) qui doit être en face de la surface de support, lequel dispositif (1) est fabriqué en matière plastique, **caractérisé en ce que** la tête (3) élargie est pourvue de nervures (4) qui peuvent se déformer en forme d'ailettes annulaires s'étendant vers l'extérieur par rapport audit corps (2), au moins le long d'une partie de sa surface extérieure, et **en ce que**, lorsque la tête (3) élargie est enfoncée dans la cannelure (6) longitudinale, lesdites nervures (4) se déforment de manière telle que la tête (3) élargie soit bloquée dans la cannelure (6) longitudinale sous l'influence d'une force de serrage agissant dans les éléments (5) planes ou en forme de plaque.

2. Système selon la revendication 1, dans lequel lesdites nervures (4) peuvent se déformer de façon plastique.

3. Système selon la revendication 1, dans lequel lesdites nervures (4) peuvent se déformer de façon élastique.

4. Système selon la revendication 1, dans lequel lesdites nervures (4) sont en forme d'ailettes annulaires.

5. Système selon l'une quelconque des revendications précédentes 1 à 4, dans lequel la tête (3) élargie présente une hauteur qui correspond au maximum à la hauteur intérieure de la cannelure (6) de l'élément (5).

6. Système selon l'une quelconque des revendications précédentes 1 à 5, dans lequel la tête (3) élargie comprend au moins trois tête inférieures (3^{I}, 3^{II}, 3^{III}) interconnectées, chaque tête inférieure (3^{I}, 3^{II}, 3^{III}) ayant une section au moins essentiellement circulaire longitudinale.

7. Système selon l'une quelconque des revendications précédentes 1 à 5, dans lequel la tête (3) élargie comprend au moins trois tête inférieures (3^{I}, 3^{II}, 3^{III}) interconnectées, chaque tête inférieure (3^{I}, 3^{II}, 3^{III}) ayant une section au moins essentiellement rectangulaire longitudinale.

8. Système selon l'une quelconque des revendications précédentes 1 à 7, dans lequel le corps (2) diminue vers le bas à partir de la tête (3) élargie.

9. Système selon l'une quelconque des revendications précédentes 1 à 8, dans lequel le corps (2) comprend des nervures (9) s'étendant radialement en forme d'ailettes annuités.
